# EUROPÄISCHE PATENTANMELDUNG

(11) **EP 1 983 230 A1**
(43) Veröffentlichungstag der Anmeldung: **22.10.2008**
(21) Anmeldenummer: 07007907.4
(22) Anmeldetag: 18.04.2007
(51) Int. Cl.: F16H 61/44, F16H 47/02

(54) **Getriebevorrichtung für ein Kraftfahrzeug und Kraftfahrzeug**

(71) Anmelder: NAF Neunkirchener Achsenfabrik AG, 91077 Neunkirchen (DE)
(72) Erfinder: Schubert, Michael, Dr., 80335 München (DE)
(74) Vertreter: Patentanwälte Hofstetter, Schurack & Skora

(57) **Zusammenfassung**

Die Erfindung betrifft eine Getriebevorrichtung (10) für ein Kraftfahrzeug, insbesondere eine selbstfahrende Arbeitsmaschine, umfassend:
- eine Abtriebswelle (12), mittels welcher zumindest eine Achse des Kraftfahrzeugs antreibbar ist;
- eine mit einem ersten Hydromotor (14a) des Kraftfahrzeugs koppelbare erste Antriebswelle (16a), welche mit der Abtriebswelle (12) in Wirkverbindung steht und mittels welcher die Abtriebswelle (12) antreibbar ist;
- eine mit einem zweiten Hydromotor (14b) des Kraftfahrzeugs koppelbare zweite Antriebswelle (16b); und
- eine Kupplungsvorrichtung (18), welche mit der Abtriebswelle (12) in Wirkverbindung steht und zwischen einer die zweite Antriebswelle (16b) mit der Abtriebswelle (12) koppelnden Übertragungsstellung und einer die zweite Antriebswelle (16b) von der Abtriebswelle (12) entkoppelnden Trennstellung schaltbar ist,

wobei die Kupplungsvorrichtung (18) eine Freilaufeinrichtung (20) umfasst, mittels welcher sie zwischen der Übertragungsstellung und der Trennstellung schaltbar ist. Die Erfindung betrifft weiterhin ein Kraftfahrzeug.

## Beschreibung

Die Erfindung betrifft eine Getriebevorrichtung für ein Kraftfahrzeug gemäß dem Oberbegriff des Patentanspruchs 1 sowie ein Kraftfahrzeug gemäß dem Oberbegriff des Patentanspruchs 9.

Eine derartige Getriebevorrichtung bzw. ein derartiges Kraftfahrzeug sind beispielsweise bereits aus der DE 44 04 829 A1 als bekannt zu entnehmen. Die Getriebevorrichtung umfasst dabei zwei Antriebswellen, welche mit einem ersten bzw. einem zweiten Hydromotor des Kraftfahrzeugs gekoppelt sind. Zur Addition der Drehmomente des ersten und des zweiten Hydromotors ist eine Kupplungsvorrichtung vorgesehen, mittels welcher die zweite Antriebswelle aus einer von einer Abtriebswelle der Getriebevorrichtung entkoppelten Trennstellung in eine die zweite Antriebswelle mit der Abtriebswelle koppelnde Übertragungsstellung geschaltet werden kann. In der Übertragungsstellung können dann beide Hydromotoren gemeinsam über ein nachgeschaltetes Planetengetriebe auf die Abtriebswelle einwirken und eine Achse des Kraftfahrzeugs antreiben.

Als nachteilig an der bekannten Getriebevorrichtung bzw. dem bekannten Kraftfahrzeug ist dabei der Umstand anzusehen, dass insbesondere bei von der Abtriebswelle entkoppeltem zweiten Hydromotor vergleichsweise hohe hydraulische Verluste auftreten, welche in der Folge erhöhte Betriebskosten verursachen. Aufgabe der vorliegenden Erfindung ist es daher, eine Getriebevorrichtung sowie ein Kraftfahrzeug der eingangs genannten Art so schaffen, welche mit verringerten hydraulischen Verlusten betreibbar sind.

Die Aufgabe wird erfindungsgemäß durch eine Getriebevorrichtung mit den Merkmalen des Patentanspruchs 1 sowie durch ein Kraftfahrzeug mit den Merkmalen des Patentanspruchs 9 gelöst. Vorteilhafte Ausgestaltungen mit zweckmäßigen und nicht-trivialen Weiterbildungen der Erfindung sind in den jeweiligen Unteransprüchen angegeben, wobei vorteilhafte Ausgestaltungen der Getriebevorrichtung - soweit anwendbar - als vorteilhafte Ausgestaltungen des Kraftfahrzeugs und umgekehrt anzusehen sind.

Eine Getriebevorrichtung, welche mit verringerten hydraulischen Verlusten zu betreiben ist, ist erfindungsgemäß dadurch geschaffen, dass die Kupplungsvorrichtung eine Freilaufeinrichtung umfasst, mittels welcher sie zwischen der Übertragungsstellung und der Trennstellung schaltbar ist. Durch eine derartige Freilaufeinrichtung verursacht der zweite Hydromotor bei in die Trennstellung geschalteter Kupplungsvorrichtung keine hydraulischen Verluste, wodurch eine signifikante Senkung der Betriebskosten erreicht wird. Die erfindungsgemäße Kupplungsvorrichtung ist zudem konstruktiv vergleichsweise einfach ausgebildet, wodurch zusätzliche Kosteneinsparungen bei Herstellung, Anschaffung und Wartung der Getriebevorrichtung gegeben sind. Wird lediglich das Drehmoment des ersten Hydromotors zum Antreiben der Abtriebswelle benötigt, bietet die Freilaufeinrichtung den weiteren Vorteil, dass sie als nach Drehzahlunterschied selbstschaltender Kupplungstyp keine konstruktiv aufwändigen Fremdschaltelemente wie Schaltzug, Ausrücklager und dergleichen benötigt, um die zweite Antriebswelle von der Abtriebswelle zu entkoppeln. Neben den dadurch erzielten Kostensenkungen wird zudem das Gesamtgewicht der Getriebevorrichtung gesenkt, wodurch bei erhöhter Zuverlässigkeit weitere Verbrauchsvorteile gegeben sind.

In einer vorteilhaften Ausgestaltung der Erfindung ist vorgesehen, dass die Freilaufeinrichtung zumindest ein Klemmelement, insbesondere einen Klemmkörper und/oder eine Klemmrolle und/oder eine Sperrklinke, umfasst. Ein derartiges Klemmelement bietet dabei den Vorteil, dass die Freilaufeinrichtung einfach an die jeweiligen konstruktiven Erfordernisse angepasst und rutschsicher ausgebildet werden kann. Die Verwendung von Klemmkörpern bzw. Klemmrollen als Klemmelement bietet zudem den Vorteil, dass die Freilaufeinrichtung geräuschlos arbeitet. Dabei kann zudem vorgesehen sein, dass die Freilaufeinrichtung umschaltbar ausgebildet und somit die Sperr- bzw. Freilaufrichtung einstellbar ist. Dies stellt eine konstruktiv einfache Möglichkeit dar, die zweite Antriebswelle bzw. den zweiten Hydromotor sowohl im Vorwärts- als auch im Rückwärtsbetrieb zur Drehmomentsteigerung zuschalten zu können.

Dabei hat es sich in weiterer Ausgestaltung als vorteilhaft gezeigt, dass die erste Antriebswelle und die Abtriebswelle und/oder die Kupplungsvorrichtung und die Abtriebswelle über zumindest eine Zahnradpaarung miteinander in Wirkverbindung stehen. Eine derartige Zahnradpaarung stellt eine konstruktiv einfache, robuste und kostengünstige Möglichkeit dar, um die Wirkverbindung zwischen den genannten, antriebsseitigen Elementen der Getriebevorrichtung und der Abtriebswelle zu bewerkstelligen. Zudem kann durch die Verwendung zumindest einer Zahnradpaarung eine besonders einfache Drehmoment- und Drehzahlanpassung der Getriebevorrichtung unter Berücksichtigung des jeweiligen Einsatzzwecks vorgenommen werden.

In einer weiteren vorteilhaften Ausgestaltung der Erfindung ist zumindest eine Mittelwelle vorgesehen, über welche die erste Antriebswelle und die Abtriebswelle und/oder die Kupplungsvorrichtung und die Abtriebswelle miteinander in Wirkverbindung stehen. Mit Hilfe zumindest einer Mittelwelle kann die Getriebevorrichtung geometrisch variabel ausgebildet werden, da die erste und/oder die zweite Antriebswelle bzw. die Kupplungsvorrichtung sowie die Abtriebswelle nicht in unmittelbarer Nachbarschaft bzw. in einem vorgegeben Winkel zueinander angeordnet werden müssen. Zudem ermöglicht auch die Verwendung zumindest einer Mittelwelle eine einfache Drehmoment- und Drehzahl-Anpassung zwischen Antriebswellen und Abtriebswelle.

Dabei hat es sich weiterhin als vorteilhaft gezeigt, dass die zumindest eine Mittelwelle zumindest ein erstes und ein zweites Zahnrad umfasst, wobei das erste Zahnrad mit einem zugeordneten Zahnrad der ersten Antriebswelle und/oder mit einem zugeordneten Zahnrad der Kupplungsvorrichtung und das zweite Zahnrad mit einem zugeordneten Zahnrad der Abtriebswelle in Wirkverbindung steht. Dies ermöglicht sowohl eine besonders variable geometrische Ausgestaltung als auch eine besonders flexible Anpassbarkeit der Übersetzung der Getriebevorrichtung. Das erste und das zweite Zahnrad der Mittelwelle können dabei unterschiedliche Größen bzw. eine unterschiedliche Anzahl an Zähnen aufweisen. Das erste und/oder das zweite Zahnrad kann zudem in Abhängigkeit der jeweiligen baulichen Bedingungen als Stirnrad, Kegelrad, Kronenrad oder dergleichen ausgebildet sein, um beispielsweise unterschiedliche Winkelstellungen zwischen Antriebswellen und Abtriebswelle bewerkstelligen zu können. Dabei kann vorgesehen sein, dass die erste Antriebswelle und die Kupplungsvorrichtung bzw. deren zugeordnete Zahnräder gemeinsam auf das erste Zahnrad der Mittelwelle wirken und jeweilige Zahnradpaarungen bilden. Alternativ kann vorgesehen sein, dass die erste Antriebswelle und die Kupplungsvorrichtung bzw. deren zugeordnete Zahnräder jeweils getrennt auf das erste und das zweite Zahnrad der Mittelwelle wirken.

In einer weiteren Ausgestaltung der Erfindung hat es sich als vorteilhaft gezeigt, dass die Kupplungsvorrichtung eine schaltbare Kupplungseinrichtung umfasst, mittels welcher die Freilaufeinrichtung überbrückbar und die Kupplungsvorrichtung zwischen der Übertragungsstellung und der Trennstellung schaltbar ist. Eine schaltbaren Kupplungseinrichtung stellt dabei eine konstruktiv einfache und robuste Möglichkeit dar, um den zweiten Hydromotor bzw. die zweite Antriebswelle auch im Rückwärtsbetrieb zur Drehmomenterhöhung zuzuschalten.

In einer weiteren vorteilhaften Ausgestaltung der Erfindung ist vorgesehen, dass die erste Antriebswelle und die Abtriebswelle in einem ersten Übersetzungsverhältnis und die Kupplungsvorrichtung und die Abtriebswelle in einem zweiten Übersetzungsverhältnis miteinander in Wirkverbindung stehen. Durch die unterschiedlichen Übersetzungsverhältnisse kann mit Hilfe der Getriebevorrichtung ein breites nutzbares Drehzahlband bereitgestellt werden. Zudem kann die Getriebevorrichtung flexibel mit unterschiedlich dimensionierten Hydromotoren gekoppelt werden.

Alternativ ist in weiterer Ausgestaltung vorgesehen, dass das erste und das zweite Übersetzungsverhältnis gleich sind. Neben einer zusätzlich erhöhten Flexibilität hinsichtlich der möglichen Einsatzzwecke, wird damit durch die Verwendung von Gleichteilen eine weitere Senkung der Herstellungskosten erzielt.

Ein weiterer Aspekt der Erfindung betrifft ein Kraftfahrzeug, wobei erfindungsgemäß vorgesehen ist, dass die Kupplungsvorrichtung eine Freilaufeinrichtung umfasst, mittels welcher sie zwischen der Übertragungsstellung und der Trennstellung schaltbar ist. Der erste Hydromotor ist dabei als Hauptantrieb des Kraftfahrzeugs ausgelegt und drehfest mit der ersten Antriebswelle gekoppelt. Zur Drehmomenterhöhung kann der zweite Hydromotor mit Hilfe der Freilaufeinrichtung durch einfache Drehzahlerhöhung dem Antriebsstrang zugeschaltet werden. Befindet sich die Kupplungsvorrichtung bzw. die Freilaufeinrichtung in der Trennstellung, verursacht der zweite Hydromotor umgekehrt keinerlei hydraulische Verluste. Weitere sich ergebende Vorteile sind bereits aus den vorhergehenden Beschreibungen zu entnehmen. Dabei hat es sich insbesondere als vorteilhaft gezeigt, dass die Freilaufeinrichtung als Klemmelement-Freilaufeinrichtung ausgebildet ist und mittels zumindest eines Klemmelements zwischen der Übertragungsstellung und der Trennstellung schaltbar ist.

In einer vorteilhaften Ausgestaltung der Erfindung ist vorgesehen, dass das Kraftfahrzeug als selbstfahrende Arbeitsmaschine, insbesondere als Traktor und/oder als Baumaschine und/oder als Forstfahrzeug, ausgebildet ist. Durch derartig ausgebildetes Kraftfahrzeug kann das von selbstfahrenden Arbeitsmaschinen üblicherweise benötigte hohe Drehmoment im unteren Drehzahlbereich durch Schalten der Kupplungsvorrichtung in die Übertragungsstellung problemlos bereitgestellt werden.

In einer weiteren vorteilhaften Ausgestaltung der Erfindung ist vorgesehen, dass mittels der Abtriebswelle zumindest zwei Achsen, insbesondere eine Vorder- und eine Hinterachse, des Kraftfahrzeugs antreibbar sind. Dadurch kann das Kraftfahrzeug ohne Traktionsprobleme auch in schwerem Gelände bzw. mit hoher Beladung zuverlässig bewegt werden.

Dabei hat es sich schließlich als vorteilhaft gezeigt, dass zumindest der zweite Hydromotor als Nullhub-Motor ausgebildet ist. Durch einen derartigen Hydromotor kann das erfindungsgemäße Kraftfahrzeug mit besonders geringen hydraulischen Verlusten betrieben werden. Darüber hinaus kann ein als Nullhub-Motor ausgebildeter Hydromotor quasi lastfrei auf die Einkuppeldrehzahl beschleunigt werden, um beispielsweise Laststöße von der Freilaufeinrichtung fernzuhalten.

Weitere Vorteile, Merkmale und Einzelheiten der Erfindung ergeben sich aus nachfolgenden Beschreibungen mehrerer Ausführungsbeispiele sowie anhand der Zeichnungen, in welchen gleiche oder funktionsgleiche Elemente mit identischen Bezugszeichen versehen sind. Dabei zeigen:
- Fig. 1: eine Getriebevorrichtung für ein Kraftfahrzeug gemäß einem ersten Ausführungsbeispiel in perspektivischer Schrägansicht;
- Fig. 2: die Getriebevorrichtung gemäß Fig. 1 in teilgeschnittener Aufsicht;
- Fig. 3: die Getriebevorrichtung gemäß Fig. 1 und 2 in schematischer Seiten-und Frontalansicht;
- Fig. 4: die Getriebevorrichtung gemäß einem zweiten Ausführungsbeispiel in schematischer Seiten- und Frontalansicht; und
- Fig. 5: die Getriebevorrichtung gemäß einem dritten Ausführungsbeispiel in schematischer Seiten- und Frontalansicht.

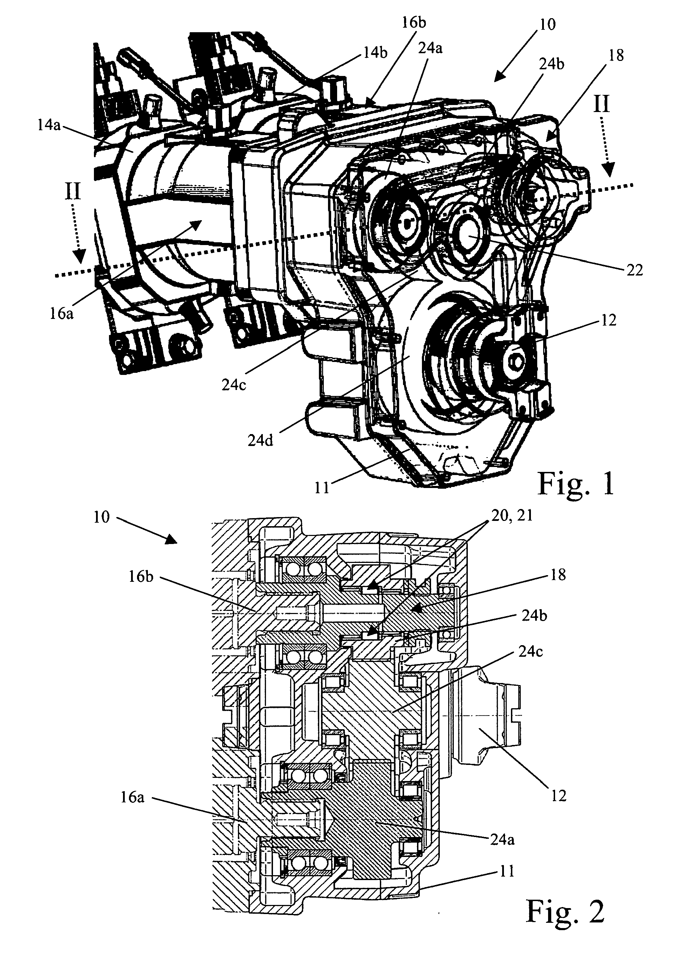

Fig. 1 zeigt eine Getriebevorrichtung 10 für ein Kraftfahrzeug (nicht abgebildet) gemäß einem ersten Ausführungsbeispiel in perspektivischer Schrägansicht. Bei dem Kraftfahrzeug handelt es sich vorzugsweise um eine selbstfahrende Arbeitsmaschine wie beispielsweise einen Traktor, eine Baumaschine, ein Forstfahrzeug oder dergleichen. Zur besseren Verdeutlichung ist dabei eine Abdeckung 11 der Getriebevorrichtung 10 transparent dargestellt. Die Getriebevorrichtung 10 umfasst eine Abtriebswelle 12, mittels welcher eine Achse des Kraftfahrzeugs antreibbar ist. Weiterhin umfasst die Getriebevorrichtung 10 eine mit einem ersten Hydromotor 14a gekoppelte erste Antriebswelle 16a sowie eine mit einem zweiten, im vorliegenden Ausführungsbeispiel als Nullhub-Motor ausgebildeten Hydromotor 14b gekoppelte zweite Antriebswelle 16b. Der zweiten Antriebswelle 16b ist eine Kupplungsvorrichtung 18 (s. Fig. 2) zugeordnet, welche ihrerseits eine Freilaufeinrichtung 20 umfasst, mittels welcher die Kupplungsvorrichtung 18 in Abhängigkeit eines Drehzahlunterschieds zwischen der erste Antriebswelle 16a und der Abtriebswelle 12 selbsttätig zwischen einer die zweite Antriebswelle 16b mit der Abtriebswelle 12 koppelnde Übertragungsstellung und einer die zweite Antriebswelle 16b von der Abtriebswelle 12 entkoppelnden Trennstellung schaltbar ist. Die erste Antriebswelle 16a, die Kupplungsvorrichtung 18 und die Abtriebswelle 12 stehen dabei über eine Mittelwelle 22 miteinander in Wirkverbindung, wobei die Wirkverbindung im vorliegenden Beispiel mit Hilfe jeweils zugeordneter Zahnräder 24a-d bewerkstelligt ist. Die Zahnräder 24a bis 24d bilden dabei die drei miteinander in unmittelbarem Eingriff stehenden Zahnradpaarungen 24a/24c, 24b/24c und 24c/24d. Alternativ können die Wirkverbindungen beispielsweise auch durch alternative reib-, kraft- oder formschlüssige Kopplungen wie Zahnriemen, Flachriemen oder dergleichen bewerkstelligt werden. Durch entsprechend dimensionierte Zahnräder 24a bis 24d sowie mit Hilfe der Mittelwelle 22 kann die Getriebevorrichtung 10 geometrisch flexibel ausgebildet und besonders einfach an unterschiedliche Drehmoment- und Drehzahl-Anforderungen, unterschiedlich dimensionierte Hydromotoren 14a, 14b oder unterschiedliche Einsatzzwecke des Kraftfahrzeugs angepasst werden. Dabei kann auch vorgesehen sein, dass nur die erste Antriebswelle 16a oder nur Kupplungsvorrichtung 18 unmittelbar mit der Mittelwelle 22 in Wirkverbindung steht. Ebenso kann vorgesehen sein, dass die Getriebevorrichtung 10 weitere Mittelwellen 22 umfasst.

Im Normalbetrieb erfolgt der Antrieb des Kraftfahrzeugs lediglich mittels des ersten Hydromotors 14a, welcher über die erste Antriebswelle 16a, die Mittelwelle 22 und die Abtriebswelle 12 eine oder mehrere Achsen des Kraftfahrzeugs antreibt, wobei die Abtriebswelle 12 im letzteren Fall mehrere Wellenausgänge besitzen kann. Der zweite Hydromotor 14b bzw. die zweite Antriebswelle 16b ist mittels der Freilaufeinrichtung 20 der Kupplungsvorrichtung 18 vom Zahnrad 24b und damit vom gesamten Antrieb entkoppelt und verursacht demnach keinerlei hydraulische Verluste. Das Zuschalten des zweiten Hydromotors 14b und damit das Schalten der Kupplungsvorrichtung 18 bzw. der Freilaufeinrichtung 20 aus der Trenn- in die Übertragungsstellung erfolgt automatisch, sobald der zweite Hydromotor eine den jeweiligen Übersetzungsverhältnissen entsprechende Drehzahl erreicht und die Klemmelemente 21 (s. Fig. 2) der Freilaufeinrichtung 20 einen rutschsicheren Kraftschluss bewirken. Fällt umgekehrt die Drehzahl des zweiten Hydromotors 14b unter die erforderliche Drehzahl, wird der Kraftschluss aufgehoben und die Freilaufeinrichtung 20 bzw. die Kupplungsvorrichtung 18 automatisch wieder in die Trennstellung geschaltet.

Fig. 2 zeigt die Getriebevorrichtung 10 gemäß Fig. 1 in teilgeschnittener Aufsicht entlang der Schnittlinie II-II. Dabei ist insbesondere die zwischen der zweiten Antriebswelle 16b und dem Zahnrad 24b angeordnete Kupplungsvorrichtung 18 erkennbar, welche die Freilaufeinrichtung 20 mit mehreren, als Klemmrollen ausgebildeten Klemmelementen 21 umfasst. Weiterhin ist erkennbar, dass das Zahnrad 24b sowie das der ersten Antriebswelle 16a zugeordnete Zahnrad 24a mit dem der Mittelwelle 22 zugeordneten Zahnrad 24c in Eingriff stehen und die beiden Zahnradpaarungen 24a/24c und 24b/24c bilden.

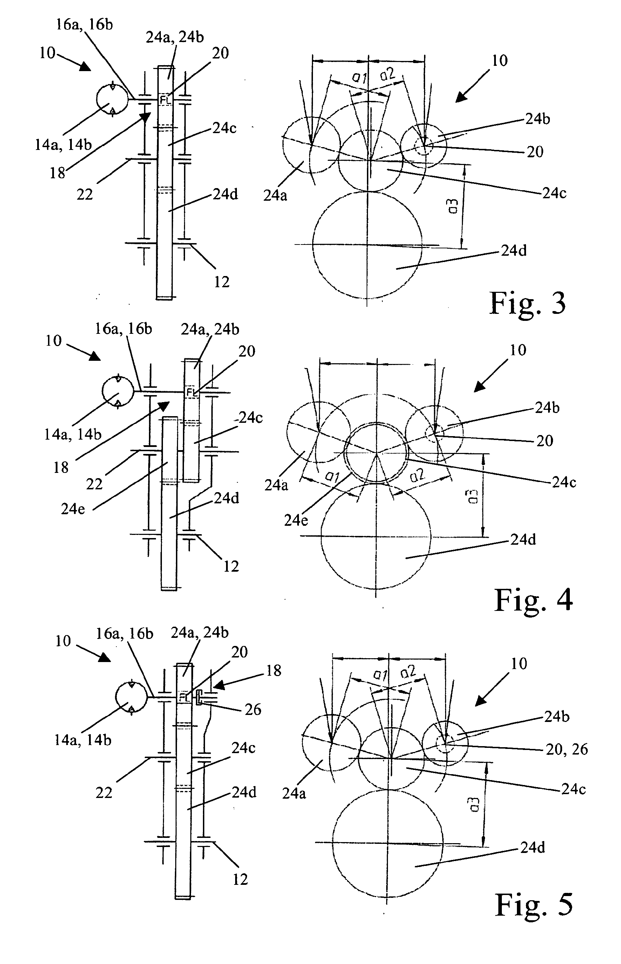

Fig. 3 zeigt die Getriebevorrichtung 10 gemäß Fig. 1 und 2 in schematischer Seiten- und Frontalansicht. Dabei sind insbesondere die Zahnradpaarungen 24a/24c, 24b/24c und 24c/24d sowie die zwischen der zweiten Antriebswelle 16b und dem Zahnrad 24b angeordnete Freilaufeinrichtung 20 erkennbar. Die Zahnradpaarungen 24a/24c und 24b/24c besitzen aufgrund der unterschiedlichen Dimensionierungen der Zahnräder 24a und 24b unterschiedliche Übersetzungsverhältnisse. Die Abstände der ersten bzw. der zweiten Die Abstände der ersten bzw. der zweiten Antriebswelle 16a, 16b zur Mittelwelle 22 sind mit a1 bzw. a2, der Abstand zwischen Mittelwelle 22 und Abtriebswelle 12 ist mit a3 bezeichnet.

Fig. 4 zeigt die Getriebevorrichtung 10 gemäß einem zweiten Ausführungsbeispiel in schematischer Seiten- und Frontalansicht. Im Unterschied zum ersten, in den Fig. 1 bis 3 gezeigt Ausführungsbeispiel, umfasst die Mittelwelle 22 vorliegend neben dem Zahnrad 24c, welches mit den den Antriebswellen 16a, 16b zugeordneten Zahnrädern 24a, 24b in Eingriff steht, ein weiteres Zahnrad 24e, welches mit dem der Abtriebswelle 12 zugeordneten Zahnrad 24d in Eingriff steht. Dies stellt eine weitere, einfache Möglichkeit dar, das Drehmoment- bzw. die Drehzahl der Getriebevorrichtung 10 optimal an den geforderten Einsatzzweck des Kraftfahrzeugs anzupassen. Die beiden der Mittelwelle 22 zugeordneten Zahnräder 24c, 24e weisen dazu - wie gezeigt - unterschiedliche Dimensionen auf. Ein weiterer Vorteil der vorliegenden Getriebevorrichtung 10 besteht darin, dass aufgrund der ausgeglichenen Axialkräfte zwischen Antriebswellen 16a, 16b - Mittelwelle 22 einerseits und Mittelwelle 22 - Abtriebswelle 12 andererseits eine konstruktiv vereinfachte Lagerung der einzelnen Wellen 16a, 16b, 22, 12 vorgesehen sein kann. Neben der guten Kompensierung von axialen Restkräften ist durch die Verwendung mehrerer Zahnräder 24c, 24e auf der Mittelwelle 22 zusätzlich eine vergleichsweise hohe konstruktive Variabilität bezüglich der Abstände der Antriebswellen 16a, 16b bzw. der Hydromotoren 14a, 14b zueinander gegeben.

Fig. 5 zeigt die Getriebevorrichtung 10 gemäß einem dritten Ausführungsbeispiel in schematischer Seiten- und Frontalansicht. Gegenüber den vorherigen Ausführungsbeispielen umfasst die Kupplungsvorrichtung 18 neben der Freilaufeinrichtung 20 eine zusätzliche Kupplungseinrichtung 26, mittels welcher die Freilaufeinrichtung 20 überbrückbar und damit die Kupplungsvorrichtung 18 direkt zwischen der Übertragungsstellung und der Trennstellung schaltbar ist. Auf diese Weise kann der zweite Hydromotor 14b starr mit der zweiten Antriebswelle 16b gekoppelt werden und somit auf Wunsch auch im Rückwärtsbetrieb des Kraftfahrzeugs zur Drehmomenterhöhung beitragen.

## Patentansprüche

1. Getriebevorrichtung (10) für ein Kraftfahrzeug, insbesondere eine selbstfahrende Arbeitsmaschine, umfassend:
- eine Abtriebswelle (12), mittels welcher zumindest eine Achse des Kraftfahrzeugs antreibbar ist;
- eine mit einem ersten Hydromotor (14a) des Kraftfahrzeugs koppelbare erste Antriebswelle (16a), welche mit der Abtriebswelle (12) in Wirkverbindung steht und mittels welcher die Abtriebswelle (12) antreibbar ist;
- eine mit einem zweiten Hydromotor (14b) des Kraftfahrzeugs koppelbare zweite Antriebswelle (16b); und
- eine Kupplungsvorrichtung (18), welche mit der Abtriebswelle (12) in Wirkverbindung steht und zwischen einer die zweite Antriebswelle (16b) mit der Abtriebswelle (12) koppelnden Übertragungsstellung und einer die zweite Antriebswelle (16b) von der Abtriebswelle (12) entkoppelnden Trennstellung schaltbar ist,
**dadurch gekennzeichnet,**
**dass** die Kupplungsvorrichtung (18) eine Freilaufeinrichtung (20) umfasst, mittels welcher sie zwischen der Übertragungsstellung und der Trennstellung schaltbar ist.

2. Getriebevorrichtung nach Anspruch 1,
**dadurch gekennzeichnet, dass** die Freilaufeinrichtung (20) zumindest ein Klemmelement, insbesondere einen Klemmkörper und/oder eine Klemmrolle (21) und/oder eine Sperrklinke, umfasst.

3. Getriebevorrichtung nach Anspruch 1 oder 2,
**dadurch gekennzeichnet,**
**dass** die erste Antriebswelle (16a) und die Abtriebswelle (12) und/oder die Kupplungsvorrichtung (18) und die Abtriebswelle (12) über zumindest eine Zahnradpaarung (24a/24c, 24b/24c, 24c/24d) miteinander in Wirkverbindung stehen.

4. Getriebevorrichtung nach einem der Ansprüche 1 bis 3,
**dadurch gekennzeichnet,**
**dass** zumindest eine Mittelwelle (22) vorgesehen ist, über welche die erste Antriebswelle (16a) und die Abtriebswelle (12) und/oder die Kupplungsvorrichtung (18) und die Abtriebswelle (12) miteinander in Wirkverbindung stehen.

5. Getriebevorrichtung nach Anspruch 3 und 4,
**dadurch gekennzeichnet,**
**dass** die zumindest eine Mittelwelle (22) zumindest ein erstes und ein zweites Zahnrad (24c, 24e) umfasst, wobei das erste Zahnrad (24c) mit einem zugeordneten Zahnrad (24a) der ersten Antriebswelle (16a) und/oder mit einem zugeordneten Zahnrad (24b) der Kupplungsvorrichtung (18) und das zweite Zahnrad (24e) mit einem zugeordneten Zahnrad (24d) der Abtriebswelle (12) in Wirkverbindung steht.

6. Getriebevorrichtung nach einem Ansprüche 1 bis 5,
**dadurch gekennzeichnet,**
**dass** die Kupplungsvorrichtung (18) eine schaltbare Kupplungseinrichtung (26) umfasst, mittels welcher die Freilaufeinrichtung (20) überbrückbar und die Kupplungsvorrichtung (18) zwischen der Übertragungsstellung und der Trennstellung schaltbar ist.

7. Getriebevorrichtung nach einem der Ansprüche 1 bis 6,
**dadurch gekennzeichnet,**
**dass** die erste Antriebswelle (16a) und die Abtriebswelle (12) in einem ersten Übersetzungsverhältnis und die Kupplungsvorrichtung (18) und die Abtriebswelle (12) in einem zweiten Übersetzungsverhältnis miteinander in Wirkverbindung stehen.

8. Getriebevorrichtung nach Anspruch 7
**dadurch gekennzeichnet,**
**dass** das erste und das zweite Übersetzungsverhältnis gleich sind.

9. Kraftfahrzeug, umfassend:
- einen ersten und einen zweiten Hydromotor (14a, 14b);
- eine Abtriebswelle (12), mittels welcher zumindest eine Achse des Kraftfahrzeugs antreibbar ist;
- eine mit dem ersten Hydromotor (14a) gekoppelte erste Antriebswelle (16a), welche mit der Abtriebswelle (12) in Wirkverbindung steht und mittels welcher die Abtriebswelle (12) antreibbar ist;
- eine mit dem zweiten Hydromotor (14b) gekoppelte zweite Antriebswelle (16b); und
- eine Kupplungsvorrichtung (18), welche mit der Abtriebswelle (12) in Wirkverbindung steht und zwischen einer die zweite Antriebswelle (16b) mit der Abtriebswelle (12) koppelnden Übertragungsstellung und einer die zweite Antriebswelle (16b) von der Abtriebswelle (12) entkoppelnden Trennstellung schaltbar ist,
**dadurch gekennzeichnet,**
**dass** die Kupplungsvorrichtung (18) eine Freilaufeinrichtung (20) umfasst, mittels welcher sie zwischen der Übertragungsstellung und der Trennstellung schaltbar ist.

10. Kraftfahrzeug nach Anspruch 9,
**dadurch gekennzeichnet, dass** es als selbstfahrende Arbeitsmaschine, insbesondere als Traktor und/oder als Baumaschine und/oder als Forstfahrzeug, ausgebildet ist.

11. Kraftfahrzeug nach Anspruch 9 oder 10,
**dadurch gekennzeichnet,**
**dass** mittels der Abtriebswelle (12) zumindest zwei Achsen, insbesondere eine Vorder- und eine Hinterachse, des Kraftfahrzeugs antreibbar sind.

12. Kraftfahrzeug nach einem der Ansprüche 9 bis 11,
**dadurch gekennzeichnet,**
**dass** zumindest der zweite Hydromotor (14b) als Nullhub-Motor ausgebildet ist.
